# EUROPEAN PATENT APPLICATION

(11) **EP 3 691 183 A1**
(43) Date of publication of application: **05.08.2020**
(21) Application number: 18860682.6
(22) Date of filing: 20.09.2018
(51) Int. Cl.: H04L 12/24

(54) **NODE MANAGEMENT METHOD AND DEVICE**

(30) Priority: 28.09.2017 CN 201710899583
(71) Applicant: ZTE Corporation, Shenzhen, Guangdong 518057 (CN)
(72) Inventor: YANG, Kun, Shenzhen Guangdong 518057 (CN); LU, Chen, Shenzhen Guangdong 518057 (CN); XIE, Fang, Shenzhen Guangdong 518057 (CN)
(74) Representative: Lavoix
(86) International application number: PCT/CN2018/106759
(87) International publication number: WO 2019/062645

(57) **Abstract**

Provided are a node management method and device. The method includes that a first node sends a connection establishment request message to a second node; the first node receives a request acceptance response message fed back by the second node, where the request acceptance response message is generated by the second node after the second node determines, according to the connection establishment request message, that local resources satisfy a service requirement of the first node; and the first node receives a connection establishment acknowledgement message sent by the second node, where the connection establishment acknowledgement message is generated by the second node after the second node determines that resource allocation for the first node is completed. The first node and the second node are cooperative nodes for each other. This solves poor service matching and poor service continuity problems during establishing a connection between cooperative nodes in the related art.

## Description

### TECHNICAL FIELD

The present disclosure relates to the field of communications and, in particular, to a node management method and device.

### BACKGROUND

With the increased application of the internet of things technology, more and more "ubiquitous networks/internet of things" with a large span of space have emerged. To cover these ubiquitous networks with the large span of space, multiple gateways are generally required to be used simultaneously for data collection and transmission. On the other hand, since the environment of the ubiquitous networks/internet of things is complex, the terminal device is usually unattended, resulting in unstable communications. To improve the reliability of information transmission and to satisfy requirements of internet of things applications, it is generally necessary to select cooperative nodes to achieve redundant backup and recovery of data, thereby promoting efficient network data transmission, achieving network security and communication reliability, and satisfying core content of specific application requirements.

For example, rapid economic development and rapid expansion of cities have made the problem of an energy shortage increasingly serious. As a major reform in the energy technology, the smart grid has become a current important research hotspot of countries. The smart grid monitors power loads and develops power supply plans and price adjustment schemes to ensure the safety, reliability and economy of electricity use. Therefore, safe operation of a grid system is the primary problem to be solved in the smart grids. When some power apparatuses in a grid trip due to excessive loads or are damaged for natural or human factors, the smart grid needs to judge failure causes in time. However, the current smart grid adopts a centralized structure, and the collected data is regularly reported to a management center, so it takes a period of time to discover the failure when a certain power apparatus fails. Moreover, a failure cause cannot be found out if the collected data is lost. In the related art, the node cooperation technology is introduced, and data backup between cooperative nodes (for example, two power collection units in the smart grid) is required. In the traditional node cooperation technology, the acceptance capacity of node resources is not considered during establishing a connection between cooperative nodes, and uploading of relevant data of nodes is also not considered during releasing the connection between the cooperative nodes. This inevitably affects service continuity and causes situations of backup data loss and simultaneous failure of main and standby apparatuses.

No effective solution has been proposed for the preceding problem in the related art yet.

### SUMMARY

Embodiments of the present disclosure provide a node management method and device so as to solve at least poor service matching and poor service continuity problems during establishing a connection between cooperative nodes in the related art.

A node management method is provided according to an embodiment of the present disclosure. The method includes: a first node sends a connection establishment request message to a second node; the first node receives a request acceptance response message fed back by the second node, where the request acceptance response message is generated by the second node after the second node determines, according to the connection establishment request message, that local resources satisfy a service requirement of the first node; and the first node receives a connection establishment acknowledgement message sent by the second node, where the connection establishment acknowledgement message is generated by the second node after the second node determines that resource allocation for the first node is completed. The first node and the second node are cooperative nodes for each other.

Another node management method is provided according to an embodiment of the present disclosure. The method includes: a second node receives a connection establishment request message sent by a first node; the second node determines whether local resources satisfy a service requirement of the first node; and the second node feeds back a request acceptance response message to the first node when the service requirement of the first node is satisfied. The first node and the second node are cooperative nodes for each other.

A node management device is provided according to another embodiment of the present disclosure. The apparatus is applied to a first node and includes: a first sending module configured to send a connection establishment request message to a second node; a first receiving module configured to receive a request acceptance response message fed back by the second node, where the request acceptance response message is generated by the second node after the second node determines, according to the connection establishment request message, that local resources satisfy a service requirement of a first node. The first node and the second node are cooperative nodes for each other.

Another node management device is provided according to another embodiment of the present disclosure. The apparatus is applied to a second node and includes: a first receiving module configured to receive a connection establishment request message sent by a first node; a determination module configured to determine whether local resources satisfy a service requirement of the first node; and a feedback module configured to feed back a request acceptance response message to the first node when the service requirement of the first node is satisfied. The first node and the second node are cooperative nodes for each other.

A storage medium is further provided according to another embodiment of the present disclosure. The storage medium is configured to store program codes for performing the steps described below.

A connection establishment request message is sent to a second node.

A request acceptance response message fed back by the second node is received, where the request acceptance response message is generated by the second node after the second node determines, according to the connection establishment request message, that local resources satisfy the service requirement of a first node.

A connection establishment acknowledgement message sent by the second node is received, where the connection establishment acknowledgement message is generated by the second node after the second node determines that resource allocation for the first node is completed.

Through the present disclosure, after the connection establishment request message is sent, a cooperative node determines that the local resources satisfy the service requirement of the first node and determines to establish connection between cooperative nodes after the resource allocation is completed. This solves poor service matching and poor service continuity problems during establishing a connection between the cooperative nodes in the related art, thereby improving the matching rate of the cooperative nodes and improving the working efficiency of the whole system.

### BRIEF DESCRIPTION OF DRAWINGS

The drawings described herein are used to provide a further understanding of the present disclosure and form a part of the present application. The illustrative embodiments and descriptions thereof in the present disclosure are used to explain the present disclosure and do not limit the present disclosure in any improper way. In the drawings:
FIG. 1 is a network architecture diagram according to an embodiment of the present disclosure;
FIG. 2 is a flowchart of a node management method according to an embodiment of the present disclosure;
FIG. 3 is a flowchart of another node management method according to an embodiment of the present disclosure;
FIG. 4 is a block diagram of a node management device according to an embodiment of the present disclosure;
FIG. 5 is a block diagram of another node management device according to an embodiment of the present disclosure;
FIG. 6 is a flowchart of a method for establishing a connection according to an embodiment; and
FIG. 7 is a flowchart of a method for releasing a connection according to an embodiment.

### DETAILED DESCRIPTION

The present disclosure will be described hereinafter in detail with reference to the drawings and in conjunction with embodiments. It is to be noted that if not in collision, the embodiments and features therein in the present application can be combined with each other.

It is to be noted that the terms "first", "second" and the like in the description, claims and above drawings of the present disclosure are used to distinguish similar objects and are not necessarily used to indicate a particular order or sequence.

### Embodiment one

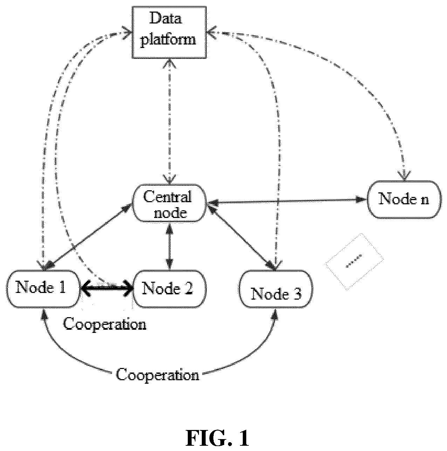

This embodiment of the present application may operate on the network architecture shown in FIG. 1. FIG. 1 is a network architecture diagram according to an embodiment of the present disclosure. As shown in FIG. 1, the network architecture includes a data platform, a central node and nodes 1 to n, where the nodes include cooperative nodes. The central node is any designated node in a network and has all functions of a common node, and the cooperative nodes can mutually monitor the valid state and backup relevant data of each other.

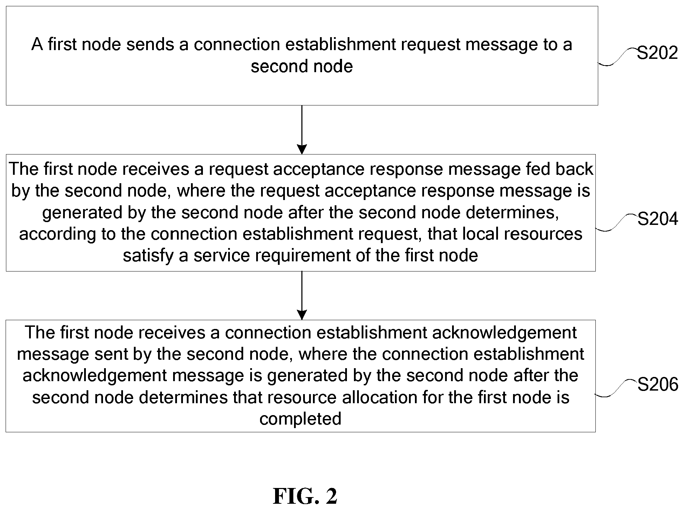

This embodiment provides a node management method operating on the network architecture described above. FIG. 2 is a flowchart of a node management method according to an embodiment of the present disclosure. As shown in FIG. 2, the method includes steps described below.

In step S202, a first node sends a connection establishment request message to a second node.

In step S204, the first node receives a request acceptance response message fed back by the second node, where the request acceptance response message is generated by the second node after the second node determines, according to the connection establishment request message, that local resources satisfy a service requirement of the first node.

In step S206, the first node receives a connection establishment acknowledgement message sent by the second node, where the connection establishment acknowledgement message is generated by the second node after the second node determines that resource allocation for the first node is completed.

The first node and the second node are cooperative nodes for each other.

Through the preceding steps, after the connection establishment request message is sent, a cooperative node determines that the local resources satisfy the service requirement of the first node and determines to establish connection between cooperative nodes after the resource allocation is completed. This solves poor service matching and poor service continuity problems during establishing the connection between the cooperative nodes in the related art, thereby improving the matching rate of the cooperative nodes and improving the working efficiency of the whole system.

Optionally, the preceding steps may be performed by any one of nodes 1 to n which may specifically be, but is not limited to, a terminal, a server, a gateway or the like.

Optionally, before the first node sends the connection establishment request message to the second node, the method of this embodiment further includes that the first node receives a cooperative node determination message sent by the central node, where the cooperative node determination message is used for notifying that the second node is selected as a cooperative node of the first node.

In this embodiment, after the first node receives the request acceptance response message fed back by the second node and before the first node receives the connection establishment acknowledgement message sent by the second node, the method further includes that the first node waits for the second node to allocate a resource to the first node.

Optionally, after the connection establishment request message is sent to the second node, the method of this embodiment further includes steps described below.

In step S11, the first node receives a request rejection response message fed back by the second node, where the request rejection response message is generated by the second node after the second node determines that the local resources do not satisfy the service requirement of the first node. The service requirement is requirement for service between the first node and the second node and includes backup, monitoring and the like.

In step S12, the first node sends a cooperative node re-selection request message to the central node according to the request rejection response message.

Optionally, after the first node receives the connection establishment acknowledgment message sent by the second node, the method of this embodiment further includes steps described below.

In step S21, the first node sends a connection release request message to the second node.

In step S22, the first node receives a connection release acknowledgement message fed back by the second node, where the connection release acknowledgement message is generated by the second node after the second node uploads relevant data of the first node to the data platform and releases relevant resource allocated to the first node. The relevant data of the first node includes data stored by the second node locally, including backup data, service data, monitoring data, state data and other data related to the first node.

As regards backup data loss and the like during disconnecting the cooperative nodes, the method solves service matching and service continuity problems during disconnecting the cooperative nodes.

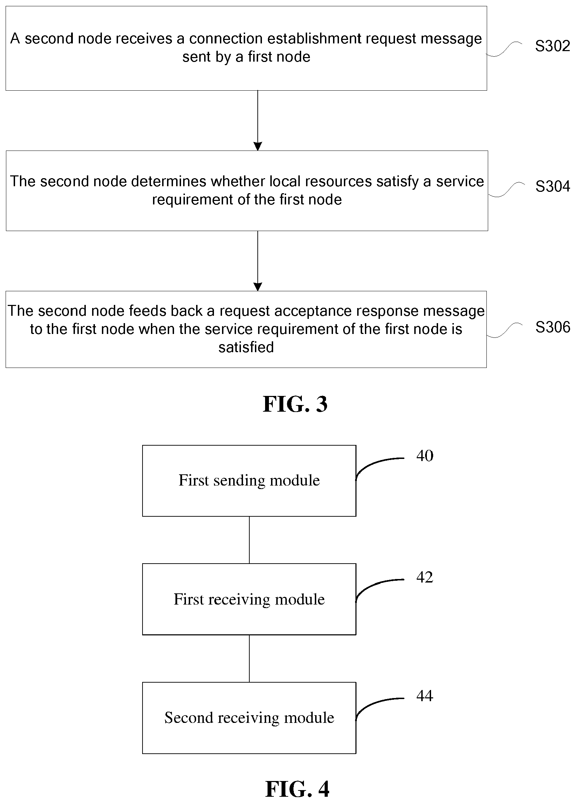

This embodiment provides another node management method operating on the preceding network architecture. FIG. 3 is a flowchart of another node management method according to an embodiment of the present disclosure. As shown in FIG. 3, the method includes steps described below.

In step S302, a second node receives a connection establishment request message sent by a first node.

In step S304, the second node determines whether local resources satisfy a service requirement of the first node.

In step S306, the second node feeds back a request acceptance response message to the first node when the service requirement of the first node is satisfied.

The first node and the second node are cooperative nodes for each other.

Optionally, after it is determined whether the local resources satisfy the service requirement of the first node, the method of this embodiment further includes that the second node feeds back a request rejection response message to the first node when the service requirement of the first node is not satisfied.

Optionally, when the service requirement of the first node is satisfied, this embodiment further includes steps described below.

In step S31, the second node allocates a resource to the first node.

In step S32, the second node sends a connection establishment acknowledgement message to the first node after allocating the resource to the first node.

Optionally, before the second node determines whether the local resources satisfy the service requirement of the first node, the method further includes that the second node determines that authentication and authorization of the first node is successful.

Optionally, after the connection establishment acknowledgement message is sent to the first node, the method further includes steps described below.

In step S41, the second node receives a connection release request message sent by the first node.

In step S42, the second node uploads relevant data of the first node to the data platform.

In step S43, the second node releases relevant resource allocated to the first node and sends a connection release acknowledgement message to the first node after receiving a data uploading acknowledgement message fed back by the data platform.

Optionally, after the connection establishment request message sent by the first node is received or the connection release request message sent by the first node is received, this embodiment further includes that the second node performs authentication and authorization on the first node.

Optionally, before the second node uploads the relevant data of the first node to the data platform, the method further includes that the second node determines that the authentication and authorization of the first node is successful.

From the description of the preceding embodiments, it will be apparent to those skilled in the art that the method in the embodiments described above may be implemented by software plus a necessary general-purpose hardware platform, or may of course be implemented by hardware. However, in many cases, the former is a preferred implementation. Based on this understanding, the solutions provided by the present disclosure substantially, or the part contributing to the related art, may be embodied in the form of a software product. The computer software product is stored in a storage medium (such as a ROM/a RAM, a magnetic disk or an optical disk) and includes several instructions for enabling a terminal (which may be a mobile phone, a computer, a server, network equipment or the like) to perform the method according to each embodiment of the present disclosure.

### Embodiment two

This embodiment provides a node management device. The device is used for implementing the preceding embodiments and preferred implementations. What has been described will not be repeated. As used below, the term "module" may be software, hardware or a combination thereof capable of implementing predetermined functions. The apparatus described in the following embodiment is preferably implemented by software, but implementation by hardware or a combination of software and hardware is also possible and conceived.

FIG. 4 is a block diagram of a node management device according to an embodiment of the present disclosure. As shown in FIG. 4, the device includes a first sending module 40, a first receiving module 42 and a second receiving module 44.

The first sending module 40 is configured to send a connection establishment request message to a second node.

The first receiving module 42 is configured to receive a request acceptance response message fed back by the second node, where the request acceptance response message is generated by the second node after the second node determines, according to the connection establishment request message, that local resources satisfy a service requirement of a first node.

The second receiving module 44 is configured to receive a connection establishment acknowledgement message sent by the second node, where the connection establishment acknowledgement message is generated by the second node after the second node determines that resource allocation for the first node is completed.

The first node and the second node are cooperative nodes for each other.

Optionally, the device further includes a second sending module and a third receiving module. The second sending module is configured to send a connection release request message to the second node after the second receiving module receives the connection establishment acknowledgement message sent by the second node. The third receiving module is configured to receive a connection release acknowledgement message fed back by the second node, where the connection release acknowledgement message is generated by the second node after the second node uploads relevant data of the first node to a data platform and releases relevant resource allocated to the first node.

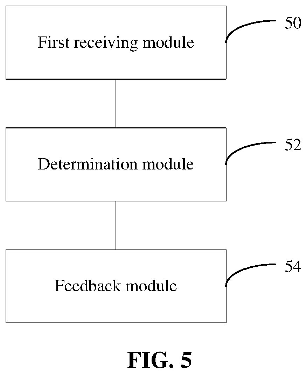

FIG. 5 is a block diagram of another node management device according to an embodiment of the present disclosure. As shown in FIG. 5, the device includes a first receiving module 50, a determination module 52 and a feedback module 54.

The first receiving module 50 is configured to receive a connection establishment request message sent by a first node.

The determination module 52 is configured to determine whether local resources satisfy a service requirement of the first node.

The feedback module 54 is configured to feed back a request acceptance response message to the first node when the service requirement of the first node is satisfied.

The first node and a second node are cooperative nodes for each other.

Optionally, the device further includes an allocation module and a first sending module. The allocation module is configured to allocate a resource to the first node when the service requirement of the first node is satisfied. The first sending module is configured to send a connection establishment acknowledgment message to the first node after resource allocation for the first node is completed.

Optionally, the device further includes a second receiving module, an uploading module and a second sending module. The second receiving module is configured to receive a connection release request message sent by the first node after the first sending module sends the connection establishment acknowledgement message to the first node. The uploading module is configured to upload relevant data of the first node to a data platform. The second sending module is configured to release relevant resource allocated to the first node and send a connection release acknowledgement message to the first node after a data uploading acknowledgement message fed back by the data platform is received.

It is to be noted that the various modules described above may be implemented by software or hardware. Implementation by hardware may, but may not necessarily, be performed in the following manners: the various modules described above are located in the same processor, or, in any combination, the various modules described above are located in different processors.

### Embodiment three

This embodiment is an optional embodiment of the present disclosure and used for describing the present application in detail in conjunction with examples.

In the node cooperation technology of the related art, the acceptance capacity of node resources is not considered during establishing the connection between cooperative nodes, and this inevitably result in service mismatching and abnormal data backup and recovery. In another aspect, uploading of relevant data is also not considered during releasing the connection between the cooperative nodes, and this inevitably affects service continuity and causes situations of backup data loss and simultaneous failure of main and standby devices. As regards the problems in related art, it is needed to perform data backup between the cooperative nodes, and when a cooperative node is found to be disconnected, it is needed for a substitutive cooperative node to actively report the failure and the backup collected data to a management center.

The solution in this embodiment includes steps described below.

After a cooperative node is selected, a node requests the cooperative node to allocate resources. After performing authentication and authorization on the node, the cooperative node determines whether local resources satisfy the resource requirement of the node. If local resources satisfy the resource requirement of the node, the cooperative node allocates a resource to the node and establishes connection with the node; if local resources do not satisfy the resource requirement of the node, a central node is requested to reselect the cooperative node.

When the cooperative node is changed, the node requests the original cooperative node to release the connection. After performing authentication and authorization on the node, the original cooperative node uploads relevant data, releases the resource allocated to the node and releases the connection.

The solution of this embodiment is applicable to a network where the relationship between the central node and cooperative nodes has been determined and each node needs to upload relevant data to a data platform. Each node has at most two cooperative nodes, and cooperative nodes can mutually monitor the valid state and backup relevant data of each other. The central node is any designated node in the network. The central node has all functions of a common node and a specific function of distributing cooperative relationships between all nodes in the network according to information such as network topology and the like. Specific application scenarios may be, but are not limited to, ubiquitous networks/internet of things applications such as smart home systems, Internet of Vehicles systems and smart city systems, and smart grids.

A description is given below in conjunction with specific examples.

### Example one: method embodiment for establishing a connection

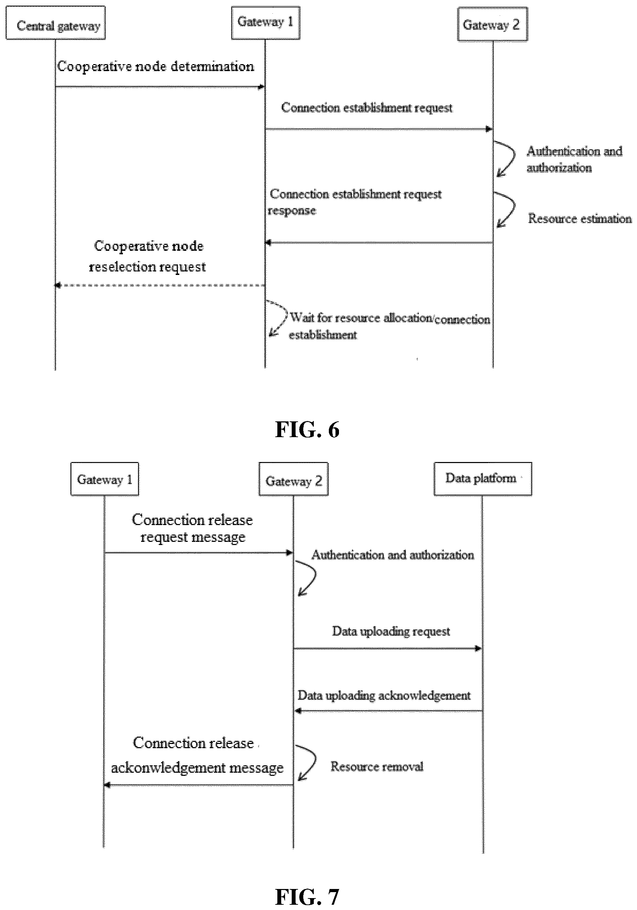

This embodiment provides a method for establishing a connection between cooperative nodes. FIG. 6 is a flowchart of a method for establishing a connection according to this embodiment. The method includes steps described below.

In step S101, after receiving a cooperative node determination message sent by the central node, a node (corresponding to the first node in the embodiment described above) sends a connection establishment request message to the cooperative node selected by the central node.

In step S102, after receiving the request message, the cooperative node (corresponding to the second node in the embodiment described above) performs authentication and authorization on the node.

In step S103, after the authentication and authorization of the first node is successful, the cooperative node estimates whether local resources satisfy the resource requirement of the node.

In step S 104a, if the resource requirement is satisfied, then the cooperative node feeds back a request acceptance response message and continues to step S105a.

In step S 104b, if the resource requirement is not satisfied, then the cooperative node feeds back a request rejection response message and continues to step S105b.

In step S 105a, after receiving the feedback message, the node waits for the cooperative node to allocate a resource and continues to step S106.

In step S105b, after receiving the feedback message, the node sends a cooperative node re-selection request message to the central node, and the process jumps to step S101.

In step S106, after completing the resource allocation, the cooperative node sends a connection establishment acknowledgement message to the node.

### Example two: method embodiment for releasing the connection

This embodiment provides a method for releasing a connection between cooperative nodes. FIG. 7 is a flowchart of a method for releasing a connection according to this embodiment. The method includes steps described below.

In step S201, a node sends a connection release request message to a cooperative node.

In step S202, after receiving the request, the cooperative node performs authentication and authorization on the node.

In step S203, after the authentication and authorization of the first node is successful, the cooperative node sends a data uploading request to the data platform to upload relevant data of the node.

In step S204, after receiving a data uploading acknowledgement message fed back by the data platform, the cooperative node releases local relevant resource of the node and sends a connection release acknowledgement message to the node.

As regards resource mismatching and backup data loss problems during the establishment and release of the connection between the cooperative nodes in the related art, this embodiment proposes the access management method of the cooperative nodes. This access management method solves service matching and service continuity problems during the establishment and release of the connection between the cooperative nodes.

### Embodiment four

This embodiment of the present disclosure further provides a storage medium. Optionally, in this embodiment, the preceding storage medium may be configured to store program codes for executing steps described below.

In step S1, a connection establishment request message is sent to a second node.

In step S2, a request acceptance response message fed back by the second node is received, where the request acceptance response message is generated by the second node after the second node determines, according to the connection establishment request message, that local resources satisfy a service requirement of a first node.

In step S3, a connection establishment acknowledgement message sent by the second node is received, where the connection establishment acknowledgement message is generated by the second node after the second node determines that resource allocation for the first node is completed.

Optionally, in this embodiment, the preceding storage medium may include, but is not limited to, a USB flash disk, a read-only memory (ROM), a random access memory (RAM), a mobile hard disk, a magnetic disk, an optical disk or another medium capable of storing program codes.

Optionally, in this embodiment, a processor performs, according to the program codes stored in the storage medium, the steps described below.

The connection establishment request message is sent to the second node.

The request acceptance response message fed back by the second node is received, where the request acceptance response message is generated by the second node after the second node determines, according to the connection establishment request message, that the local resources satisfy the service requirement of the first node.

The connection establishment acknowledgement message sent by the second node is received, where the connection establishment acknowledgement message is generated by the second node after the second node determines that the resource allocation for the first node is completed.

Optionally, for specific examples of this embodiment, see the examples described in the embodiments and optional implementations described above, and the specific examples will not be described in this embodiment.

Apparently, it should be understood by those skilled in the art that each of the modules or steps of the present disclosure described above may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present disclosure is not limited to any specific combination of hardware and software.

The above are only preferred embodiments of the present disclosure and are not intended to limit the present disclosure, and for those skilled in the art, the present disclosure may have various modifications and variations. Any modifications, equivalent substitutions, improvements and the like made within the spirit and principle of the present disclosure fall within the scope of the present disclosure.

### INDUSTRIAL APPLICABILITY

The present disclosure is applicable to the field of communications so as to solve poor service matching and poor service continuity problems during establishing a connection between cooperative nodes in the related art, thereby improving the matching rate of the cooperative nodes and improving the working efficiency of the whole system.

## Claims

1. A node management method, comprising:
sending, by a first node, a connection establishment request message to a second node;
receiving, by the first node, a request acceptance response message fed back by the second node, wherein the request acceptance response message is generated by the second node after the second node determines, according to the connection establishment request message, that local resources satisfy a service requirement of the first node; and
receiving, by the first node, a connection establishment acknowledgement message sent by the second node, wherein the connection establishment acknowledgement message is generated by the second node after the second node determines that resource allocation for the first node is completed,
wherein the first node and the second node are cooperative nodes for each other.

2. The method of claim 1, wherein before sending, by a first node, a connection establishment request message to a second node, the method further comprises:
receiving, by the first node, a cooperative node determination message sent by a central node, wherein the cooperative node determination message is used for notifying that the second node is selected as the cooperative node of the first node .

3. The method of claim 1, wherein after sending, by a first node, a connection establishment request message to a second node, the method further comprises:
receiving, by the first node, a request rejection response message fed back by the second node, wherein the request rejection response message is generated by the second node after the second node determines that the local resources do not satisfy the service requirement of the first node; and
sending, by the first node, a cooperative node re-selection request message to a central node according to the request rejection response message.

4. The method of claim 1, wherein after receiving, by the first node, a connection establishment acknowledgement message sent by the second node, the method further comprises:
sending, by the first node, a connection release request message to the second node; and
receiving, by the first node, a connection release acknowledgement message fed back by the second node, wherein the connection release acknowledgement message is generated by the second node after the second node uploads relevant data of the first node to a data platform and releases the relevant resource allocated to the first node.

5. The method of claim 1, wherein after receiving, by the first node, a request acceptance response message fed back by the second node and before receiving, by the first node, a connection establishment acknowledgement message sent by the second node, the method further comprises:
waiting, by the first node, for the second node to allocate a resource to the first node.

6. A node management method, comprising:
receiving, by a second node, a connection establishment request message sent by a first node;
determining, by the second node, whether local resources satisfy a service requirement of the first node; and
feeding back, by the second node, a request acceptance response message to the first node when the service requirement of the first node is satisfied,
wherein the first node and the second node are cooperative nodes for each other.

7. The method of claim 6, wherein after determining, by the second node, whether local resources satisfy a service requirement of the first node, the method further comprises:
feeding back, by the second node, a request rejection response message to the first node when the service requirement of the first node is not satisfied.

8. The method of claim 6, wherein when the service requirement of the first node is satisfied, the method further comprises:
allocating, by the second node, a resource to the first node; and
sending, by the second node, a connection establishment acknowledgement message to the first node after the second node completes resource allocation for the first node.

9. The method of claim 6, wherein after receiving the connection establishment request message sent by the first node, the method further comprises:
performing, by the second node, authentication and authorization on the first node.

10. The method of claim 9, wherein before determining, by the second node, whether the local resources satisfy the service requirement of the first node, the method further comprises:
determining, by the second node, that the authentication and authorization of the first node is successful.

11. The method of claim 8, wherein after sending the connection establishment acknowledgement message to the first node, the method further comprises:
receiving, by the second node, a connection release request message sent by the first node;
uploading, by the second node, relevant data of the first node to a data platform; and
releasing, by the second node, the relevant resource allocated to the first node and sending, by the second node, a connection release acknowledgement message to the first node after the second node receives a data uploading acknowledgement message fed back by the data platform.

12. The method of claim 11, wherein after receiving the connection release request message sent by the first node, the method further comprises:
performing, by the second node, authentication and authorization on the first node.

13. The method of claim 12, wherein, before uploading, by the second node, relevant data of the first node to a data platform, the method further comprises:
determining, by the second node, that the authentication and authorization of the first node is successful.

14. A node management device, applied to a first node and comprising:
a first sending module configured to send a connection establishment request message to a second node;
a first receiving module configured to receive a request acceptance response message fed back by the second node, wherein the request acceptance response message is generated by the second node after the second node determines, according to the connection establishment request message, that local resources satisfy a service requirement of the first node; and
a second receiving module configured to receive a connection establishment acknowledgement message sent by the second node, wherein the connection establishment acknowledgement message is generated by the second node after the second node determines that resource allocation for the first node is completed,
wherein the first node and the second node are cooperative nodes for each other.

15. The device of claim 14, further comprising:
a second sending module configured to send a connection release request message to the second node after the second receiving module receives the connection establishment acknowledgement message sent by the second node; and
a third receiving module configured to receive a connection release acknowledgement message fed back by the second node, wherein the connection release acknowledgement message is generated by the second node after the second node uploads relevant data of the first node to a data platform and releases the relevant resource allocated to the first node.

16. A node management device, applied to a second node and comprising:
a first receiving module configured to receive a connection establishment request message sent by a first node;
a determination module configured to determine whether local resources satisfy a service requirement of the first node; and
a feedback module configured to feed back a request acceptance response message to the first node when the service requirement of the first node is satisfied,
wherein the first node and the second node are cooperative nodes for each other.

17. The device of claim 16, further comprising:
an allocation module configured to allocate a resource to the first node when the service requirement of the first node is satisfied; and
a first sending module configured to send a connection establishment acknowledgment message to the first node after resource allocation for the first node is completed.

18. The device of claim 17, further comprising:
a second receiving module configured to receive a connection release request message sent by the first node after the first sending module sends the connection establishment acknowledgement message to the first node;
an uploading module configured to upload relevant data of the first node to a data platform; and
a second sending module configured to release the relevant resource allocated to the first node and send a connection release acknowledgement message to the first node after a data uploading acknowledgement message fed back by the data platform is received.

19. A storage medium storing a program, wherein when the program is executed, the method of any one of claims 1 to 13 is performed.

20. A processor, which is configured to execute a program, wherein when the program is executed, the method of any one of claims 1 to 13 is performed.
